# EUROPÄISCHE PATENTSCHRIFT

(11) **EP 3 230 086 B1**
(45) Veröffentlichungstag und Bekanntmachung des Hinweises auf die Patenterteilung: **20.02.2019**
(21) Anmeldenummer: 15766851.8
(22) Anmeldetag: 23.09.2015
(51) Int. Cl.: B60C 11/13, B60C 11/03, B60C 11/01

(54) **FAHRZEUGLUFTREIFEN**
PNEUMATIC TYRE
PNEUMATIQUE

(30) Priorität: 11.12.2014 DE 102014225621
(43) Veröffentlichungstag der Anmeldung: 18.10.2017
(73) Patentinhaber: Continental Reifen Deutschland GmbH, 30165 Hannover (DE)
(72) Erfinder: BEHR, Ulrich, 30167 Hannover (DE); DOMSCHEIT, Andreas, 30459 Hannover (DE); RITTWEGER, Stefan, 30826 Garbsen (DE)
(74) Vertreter: Preusser, Andrea
(86) Internationale Anmeldenummer: PCT/EP2015/071811
(87) Internationale Veröffentlichungsnummer: WO 2016/091412

(56) Entgegenhaltungen:
- DE-A1-102012 108 384

## Beschreibung

Die Erfindung betrifft einen Fahrzeugluftreifen mit einem Laufstreifen, welcher zumindest ein schulterseitig verlaufendes Profilband aufweist, das laufstreifeninnenseitig durch eine in Umfangsrichtung umlaufende Umfangsrille von weiteren Profilelementen getrennt ist, wobei im Profilband eine Vielzahl von in Umfangsrichtung beabstandeten Querrillen verläuft, welche über die Bodenaufstandsfläche hinaus verlaufen und innerhalb des Profilbandes in einem Abstand vor der Umfangsrille enden.

Aus der gattungsbildenden DE 10 2012 108 384 A1 ist ein Fahrzeugluftreifen mit einem Laufstreifen mit Profilbändern oder Profilblockreihen bekannt, in welchen Rillen mit einem ersten Rillenabschnitt und einem zweiten Rillenabschnitt ausgebildet sind. Der erste Rillenabschnitt verläuft zur axialen Richtung unter einem Winkel von höchstens 15° und mündet in eine der das Profilband bzw. die Profilblockreihe begrenzende Umfangsrille ein. Der zweite Rillenabschnitt erstreckt sich in Umfangsrichtung und schließt an den ersten Rillenabschnitt an.

In den schulterseitigen Profilbereichen eines Reifens sollen möglichst große, geschlossene Blöcke bzw. Rippen vorgesehen sein, um gute Fahreigenschaften des Reifens auf trockenen Fahrbahnen, wie gute Bremseigenschaften und Handlingeigenschaften, zu gewährleisten.

Andererseits sind möglichst kleinflächige und offene Profilstrukturen für die Nässeeigenschaften, wie das Bremsen auf nassen Fahrbahnen und generell das Aquaplaningverhalten, vorteilhaft. Der Wasserfilm auf der Straße soll möglichst schnell beseitigt werden, um fortlaufend einen direkten Kontakt der Profilelemente mit der Straße bzw. dem Untergrund sicherzustellen.

Der Erfindung liegt daher die Aufgabe zugrunde, bei einem Fahrzeugluftreifen der eingangs genannten Art den erwähnten Zielkonflikt besser zu lösen als bisher, also ausgewogene Profilstrukturen zur Verfügung zu stellen, die sowohl einen Abtransport von Wasser unterstützen als auch stabil genug sind, um sich beim Bremsen, etwa auf trockenen Fahrbahnen, nur wenig zu verformen. Die Profilpositive sollen unter allen Bedingungen ihren Kontakt mit dem Untergrund beibehalten.

Gelöst wird die gestellte Aufgabe erfindungsgemäß durch einen Fahrzeugluftreifen gemäß Anspruch 1.

Bei erfindungsgemäß ausgeführten Laufstreifen sind daher im schulterseitigen Profilband oberflächliche Entwässerungsnuten besonderer Anordnung und Geometrie vorgesehen. An den ihren Anfang bildenden Verbindungsstellen zu den Querrillen weisen diese Entwässerungsnuten ihre größte Breite auf, sodass sie einerseits durch ihre Verbindung mit Querrillen und andererseits durch ihre Breite in der Lage sind, Wasser besonders gut aufzunehmen und in die Querrillen abzuleiten. Die weitgehend nur oberflächlich vorgesehenen Entwässerungsnuten beeinflussen kaum die Stabilität der durch die Querrillen gebildeten Profilpositive, sodass gleichzeitig auch die Eigenschaften des Fahrzeugluftreifens auf trockenen Fahrbahnen gut erhalten bleiben.

Bei einer bevorzugten Ausführungsform der Erfindung geht von jeder Querrille eine Entwässerungsnut aus, welche entweder in einem Abstand von 2 mm bis 4 mm vor der in Umfangsrichtung benachbarten Querrille endet oder bis zu der in Umfangsrichtung benachbarten Querrille verläuft. Bei dieser Ausführungsvariante können die Entwässerungsnuten ein besonders gutes Wasserableitvermögen aufweisen.

Bei einer weiteren, vorteilhaften Ausführungsvariante der Erfindung verlaufen die Entwässerungsnuten über zumindest eine in Umfangsrichtung benachbarte Querrille hinaus und verlaufen dabei bis zu jener Querrille bzw. enden in einem Abstand vor jener Querrille, von welcher die in Umfangsrichtung nächste Entwässerungsnut ausgeht. Diese Ausführungsvariante lässt sich besonders gut hinsichtlich der Stabilität der Profilpositive auslegen.

Bevorzugter Weise beträgt der Abstand der Enden der Entwässerungsnuten von den Querrillen 2 mm bis 4 mm, die größte Breite der Entwässerungsnuten ist vorzugsweise 2 mm bis 4 mm.

Zur Erhöhung des Wasserableitvermögens der Entwässerungsnuten können diese derart ausgeführt sein, dass ihre Tiefe in Richtung ihrer Stelle mit der größten Breite insbesondere kontinuierlich zunimmt. Eine weitere, diesbezügliche Maßnahme besteht darin, dass die Entwässerungsnuten in einem ersten Abschnitt, welcher an ihren Beginn bei einer Umfangsrille anschließt, eine Tiefe aufweisen, die der Tiefe der Querrille an dieser Stelle entspricht. Dieser Abschnitt weist insbesondere eine Umfangserstreckung von 2 mm bis 4 mm auf.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 einen Umfangsabschnitt eines schulterseitigen Bereiches eines Laufstreifens eines Fahrzeugluftreifens mit einer ersten Ausführungsvariante der Erfindung und
Fig. 2 in einer analogen Darstellung eine zweite Ausführungsvariante der Erfindung.

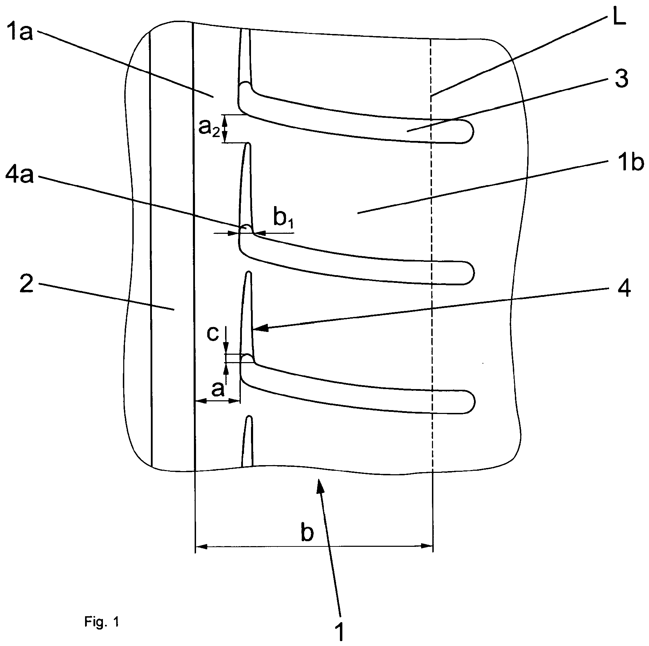

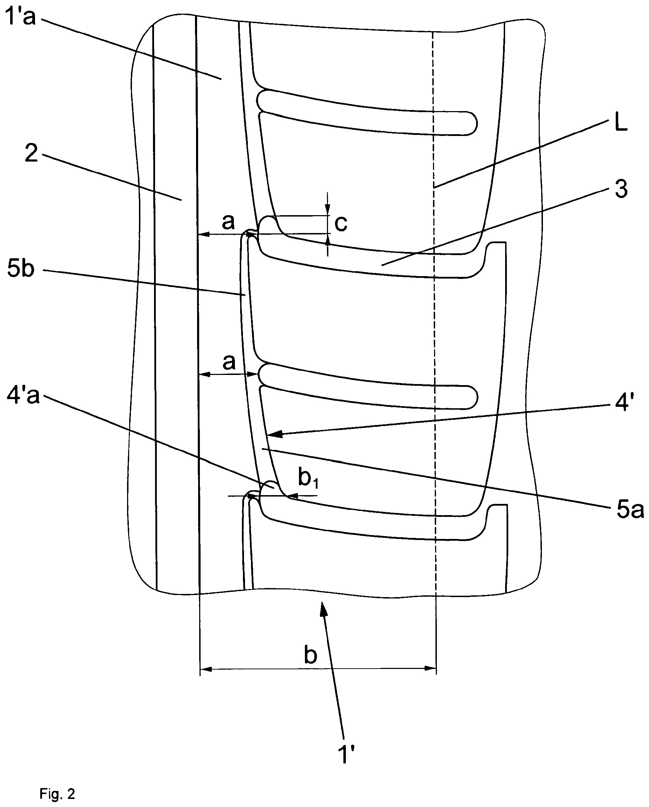

Die Erfindung befasst sich mit einer speziellen Ausgestaltung von schulterseitig verlaufenden Profilbändern im Laufstreifen eines Fahrzeugluftreifens in Radialbauart, insbesondere eines Reifens für Personenkraftwagen oder Vans. Die Figuren 1 und 2 zeigen Draufsichten von Umfangsabschnitten von schulterseitig verlaufenden Profilbändern 1, 1', welche laufstreifeninnenseitig durch eine Umfangsrille 2 begrenzt und von weiteren Profilstrukturen, die nicht dargestellt sind, getrennt sind. Die mit L bezeichnete Linie kennzeichnet den außenseitigen Rand des Laufstreifens, welcher dem Rand der bodenberührenden Fläche bzw. der Bodenaufstandsfläche entspricht, gemäß dem statisch ermittelten Footprint des Reifens gemäß E.T.R.T.O.-Standards (Last bei 70 % der Tragfähigkeit bei einem Innendruck von 2,5 bar und einem Innendruck von 85 % von 2,5 bar). Innerhalb der Bodenaufstandsfläche weist das Profilband 1, 1' eine maximale Breite b auf, die insbesondere 20 % bis 30 % der Breite des Laufstreifens in der Bodenaufstandsfläche entspricht. Im Profilband 1, 1' ist eine Vielzahl von in Umfangsrichtung voneinander unter üblichen Abständen verlaufenden Querrillen 3 angeordnet, welche im Wesentlichen in axialer Richtung verlaufen und an der Profiloberfläche eine Breite von 2 mm bis 5 mm aufweisen. Die Querrillen 3 können unter einem spitzen Winkel von insbesondere bis zu 30° gegenüber der axialen Richtung verlaufen. In ihrem Verlauf innerhalb der Bodenaufstandsfläche weisen die Querrillen 3 eine Tiefe auf, die zumindest 60 % der für den betreffenden Reifen vorgesehenen maximalen Profiltiefe, die zwischen 6 mm und 8,5 mm gewählt wird, beträgt. Die Querrillen 3 verlaufen über die Bodenaufstandsfläche hinaus, wobei ihre Tiefe im schulterseitig auslaufenden Bereich kontinuierlich geringer wird. Die Querrillen 3 enden in einem in axialer Richtung gemessenen Abstand a vor der Umfangsrille 2, daher innerhalb des Profilbandes 1, 1', wobei a in der Größenordnung von 5 mm bis 10 mm beträgt. Der Umfangsrille 2 benachbart befinden sich daher im Profilband 1, 1' als Profilstrukturen ein rippenartig umlaufender Abschnitt 1a, 1'a, welcher bis auf gegebenenfalls vorgesehene, schmale Einschnitte, die nicht dargestellt sind, unstrukturiert ausgebildet ist, und blockartige Profilelemente 1b, 1'b.

Bei der in Fig. 1 gezeigten Ausführungsform schließt an das laufstreifeninnenseitige Ende jeder Querrille 3 eine seichte Entwässerungsnut 4 an. Die Entwässerungsnuten 4 verlaufen in übereinstimmender Richtung in Umfangsrichtung des Laufstreifens oder unter einem kleinen spitzen Winkel von bis zu 10° zur Umfangsrichtung. Die Tiefe der Entwässerungsnuten 4 beträgt 1,5 mm bis 3 mm, insbesondere 2 mm, und kann über die Erstreckung der Entwässerungsnuten 4 zumindest im Wesentlichen konstant sein oder in Richtung zur jeweiligen Querrille 3 größer werden. Die Breite der Entwässerungsnuten 4 ändert sich über den Verlauf der Entwässerungsnuten 4 derart, dass sie ihre größte Breite b₁ von 2 mm bis 4 mm an ihren Verbindungsstellen zu den Querrillen 3 aufweisen, wobei sich ihre Breite von diesem Ende in Richtung ihres zweiten Endes kontinuierlich verringert und am zweiten Ende 0,5 mm bis 1,5 mm beträgt. Jede Entwässerungsnut 4 endet dabei jeweils in einem in Umfangsrichtung gemessenen Abstand a₂ von 2 mm bis 4 mm vor der in Umfangsrichtung benachbarten Querrille 3. Bei einer alternativen Ausführungsform münden die Entwässerungsnuten 4 mit ihren schmäleren Enden in die Endbereiche der betreffenden Querrillen 3. Jede Entwässerungsnut 4 bildet gemeinsam mit der bzw. mit den mit ihr verbundenen Querrille(n) 3 eines der blockartigen Profilelemente 1b im Profilband 1. Zur Verbesserung der Wasserableitung kann die Entwässerungsnut 4 an ihrem unmittelbar an das Ende der Querrille 3 anschließenden Abschnitt 4a in einer Tiefe ausgeführt sein, die der Tiefe der Querrille 3 entspricht bzw. es kann in diesem ersten Abschnitt 4a eine Art Rampe bzw. Schrägfläche ausgebildet sein, sodass sich die Tiefe im Abschnitt 4a von der Tiefe der Querrille 3 auf die Tiefe der Entwässerungsnut 4 verringert. Dieser erste Abschnitt 4a ist kurz, seine Umfangserstreckung c beträgt in der Größenordnung von 2 mm bis 4 mm.

Bei der in Fig. 2 gezeigten Ausführungsvariante sind analog zu Fig. 1 in Umfangsrichtung verlaufende Entwässerungsnuten 4' vorgesehen, die in Umfangsrichtung über zwei blockartige Profilelemente 1'b verlaufen und dadurch jeweils bei jeder zweiten Querrille 3 enden, wobei diese Querrillen 3 jeweils jene sind, von welchen jeweils die nächste Entwässerungsnut 4' ausgeht. Die dazwischen liegende Querrille 3 mündet jeweils in die Entwässerungsnut 4'. Auch bei dieser Ausgestaltung verbleibt im Profilband 1' bei der Umfangsrille 2, analog zur ersten Ausführungsform gemäß Fig. 1, ein rippenartig umlaufender Abschnitt 1'a. Wie bei der Ausführungsform gemäß Fig. 1 weist die Entwässerungsnut 4' an ihrem Anfang bei einer Querrille 3 ihre größte Breite b₁ von 2 mm bis 4 mm auf. Die Breite der Entwässerungsnut 4' nimmt entweder über ihren gesamten Verlauf im Wesentlichen kontinuierlich ab oder nur über den ersten, zwischen zwei benachbarten Querrillen 3 verlaufenden Abschnitt 5a, wobei in diesem Abschnitt 5a die Breite der Entwässerungsnut 4' auf 1,5 mm bis 2,5 mm abnimmt. Im zweiten Abschnitt 5b kann die Entwässerungsnut 4' eine zumindest im Wesentlichen konstante Breite von 1,5 mm bis 2,5 mm aufweisen. Am zweiten Ende jeder Entwässerungsnut 4' kann ein bogenförmig gekrümmter Endabschnitt zum Ende jener Querrille 3 verlaufen, an welchem die in Umfangsrichtung nächste Entwässerungsnut 4' anschließt. Die Tiefe der Entwässerungsnut 4' kann jener der Entwässerungsnut 4 im ersten Ausführungsbeispiel, daher 1,5 mm bis 3 mm, insbesondere 2 mm, entsprechen. Auch bei dieser Ausführungsvariante kann im ersten, kurzen Abschnitt 4'a analog zur Ausführungsform gemäß Fig. 1 die Tiefe der Entwässerungsnut 4' der Tiefe der jeweiligen Querrille 3 entsprechen bzw. kann hier eine, wie oben beschrieben, ansteigende Rampe oder Schrägfläche vorgesehen sein.

Besonders vorteilhaft ist eine Anordnung der Entwässerungsnuten in laufrichtungsgebunden gestalteten Laufstreifen, wobei die Ausgestaltung derart erfolgt, dass die schmäleren Enden der Entwässerungsnuten beim Abrollen des Reifens (Vorwärtsfahrt) zuerst in den Untergrund eintreten.

### Bezugsziffernliste

- 1, 1': Profilband
- 1a, 1'a: Abschnitt
- 1b, 1'b: Profilelement
- 2: Umfangsrille
- 3: Querrille
- 4, 4': Entwässerungsnut
- 4a, 4'a: Abschnitt
- 5a, 5b: Abschnitt
- a, a₂: Abstand
- b, b₁: Breite
- c: Erstreckung
- L: Laufstreifenrand

## Patentansprüche

1. Fahrzeugluftreifen mit einem Laufstreifen, welcher zumindest ein schulterseitig verlaufendes Profilband (1, 1') aufweist, das laufstreifeninnenseitig durch eine in Umfangsrichtung umlaufende Umfangsrille (2) von weiteren Profilelementen getrennt ist, wobei im Profilband (1, 1') eine Vielzahl von in Umfangsrichtung beabstandeten Querrillen (3) verläuft, wobei am laufstreifeninnenseitigen Ende der Querrillen (3) in Umfangsrichtung verlaufende Entwässerungsnuten (4,4') einmünden, welche eine sich über ihre Erstreckung verringernde Breite (b₁) aufweisen, wobei sie ihre größte Breite (b₁) an ihrem Anfang bei der Querrille (3) aufweist, **dadurch gekennzeichnet,**
**dass** die Querrillen (3) über die Bodenaufstandsfläche hinaus verlaufen und innerhalb des Profilbandes (1, 1') in einem Abstand (a) vor der Umfangsrille (2) enden, wobei der Abstand (a) 5,0 mm bis 10,0 mm beträgt und wobei die in Umfangsrichtung verlaufenden Entwässerungsnuten (4, 4') zumindest über einen Großteil ihrer Erstreckung eine Tiefe von 1,5 mm bis 3 mm aufweisen und die Bodenaufstandsfläche sich nach E.T.R.T.O.-Standard aus der Last bei 70% der Tragfähigkeit des Reifens bei einem Innendruck von 2,5 bar und einem Innendruck von 85% von 2,5 bar ergibt.

2. Fahrzeugluftreifen nach Anspruch 1, **dadurch gekennzeichnet, dass** von jeder Querrille (3) eine Entwässerungsnut (4) ausgeht, welche entweder in einem Abstand (a₂) von 2 mm bis 4 mm vor der in Umfangsrichtung benachbarten Querrille (3) endet oder bis zu der in Umfangsrichtung benachbarten Querrille (3) verläuft.

3. Fahrzeugluftreifen nach Anspruch 1, **dadurch gekennzeichnet, dass** die Entwässerungsnuten (4') über zumindest eine in Umfangsrichtung benachbarte Querrille (3) hinaus verlaufen und bis zu jener Querrille (3) verlaufen bzw. in einem Abstand vor jener Querrille (3) enden, von welcher die in Umfangsrichtung nächste Entwässerungsnut (4') ausgeht.

4. Fahrzeugluftreifen nach einem der Ansprüche 1 bis 3, **dadurch gekennzeichnet, dass** der Abstand (a₂) der Enden der Entwässerungsnuten (4, 4') von den Querrillen (3) 2 mm bis 4 mm beträgt.

5. Fahrzeugluftreifen nach einem der Ansprüche 1 bis 4, **dadurch gekennzeichnet, dass** die größte Breite (b₁) der Entwässerungsnuten (4, 4') 2 mm bis 4 mm beträgt.

6. Fahrzeugluftreifen nach einem der Ansprüche 1 bis 5, **dadurch gekennzeichnet, dass** die Tiefe der Entwässerungsnuten (4, 4') in Richtung ihrer Stelle mit der größten Breite (b₁) insbesondere kontinuierlich zunimmt.

7. Fahrzeugluftreifen nach einem der Ansprüche 1 bis 6, **dadurch gekennzeichnet, dass** die Entwässerungsnuten (4, 4') in einem ersten Abschnitt (4a, 5a), welcher an ihren Beginn bei einer Querrille (3) anschließt, eine Tiefe aufweisen, die der Tiefe der Querrille (3) an dieser Stelle entspricht.

8. Fahrzeugluftreifen nach Anspruch 7, **dadurch gekennzeichnet, dass** der erste Abschnitt (4a, 5a) eine Erstreckung von 2 mm bis 4 mm aufweist.

## Claims

1. Pneumatic vehicle tyre with a tread, which has at least one profile strip (1, 1'), which runs along the shoulder and on the inner side of the tread is separated from further profile elements by a circumferential groove (2) running in the circumferential direction, wherein a multiplicity of transverse grooves (3) that are spaced apart in the circumferential direction run in the profile strip (1, 1'), wherein water expulsion channels (4, 4'), which run in the circumferential direction and have a width (b₁) decreasing over their extent, open out at the end of the transverse grooves (3) on the inner side of the tread, wherein they have their greatest width (b₁) where they begin at the transverse groove (3),
**characterized**
**in that** the transverse grooves (3) run beyond the ground contact area and, within the profile strip (1, 1'), end at a distance (a) before the circumferential groove (2), wherein the distance (a) is 5.0 mm to 10.0 mm and wherein the water expulsion channels (4, 4') that run in the circumferential direction have at least over a large part of their extent a depth of 1.5 mm to 3 mm and the ground contact area is obtained in accordance with the E.T.R.T.O. standard from the load at 70% of the load-bearing capacity of the tyre at an internal pressure of 2.5 bar and an internal pressure of 85% of 2.5 bar.

2. Pneumatic vehicle tyre according to Claim 1, **characterized in that** from each transverse groove (3) there extends a water expulsion channel (4), which either ends at a distance (a₂) of 2 mm to 4 mm before the adjacent transverse groove (3) in the circumferential direction or runs up to the adjacent transverse groove (3) in the circumferential direction.

3. Pneumatic vehicle tyre according to Claim 1, **characterized in that** the water expulsion channels (4') run beyond at least one adjacent transverse groove (3) in the circumferential direction and run up to that transverse groove (3) or end at a distance before that transverse groove (3) from which the next water expulsion channel (4') in the circumferential direction extends.

4. Pneumatic vehicle tyre according to one of Claims 1 to 3, **characterized in that** the distance (a₂) of the ends of the water expulsion channels (4, 4') from the transverse grooves (3) is 2 mm to 4 mm.

5. Pneumatic vehicle tyre according to one of Claims 1 to 4, **characterized in that** the greatest width (b₁) of the water expulsion channels (4, 4') is 2 mm to 4 mm.

6. Pneumatic vehicle tyre according to one of Claims 1 to 5, **characterized in that** the depth of the water expulsion channels (4, 4') increases, in particular continuously, in the direction of their point of greatest width (b₁).

7. Pneumatic vehicle tyre according to one of Claims 1 to 6, **characterized in that** the water expulsion channels (4, 4') have in a first portion (4a, 5a), which adjoins where they begin at a transverse groove (3), a depth which corresponds to the depth of the transverse groove (3) at this point.

8. Pneumatic vehicle tyre according to Claim 7, **characterized in that** the first portion (4a, 5a) has an extent of 2 mm to 4 mm.

## Revendications

1. Bandage pneumatique pour roue de véhicule, présentant une bande de roulement dotée d'au moins une bande profilée (1, 1') s'étendant côté épaulement et séparée d'autres éléments profilés situés du côté intérieur de la bande de roulement par une rainure périphérique (2) qui s'étend dans la direction périphérique,
plusieurs nervures transversales situées à distance les unes des autres dans la direction périphérique s'étendant dans la bande profilée (1, 1'), des rainures (4, 4') d'évacuation d'eau dont la largeur (b₁) se réduit sur leur extension et s'étendant dans la direction périphérique débouchant à l'extrémité des rainures transversales (3) disposées vers l'intérieur de la bande de roulement, leur plus grande largeur (b₁) étant située à leur départ au niveau de la rainure transversale (3),
**caractérisé en ce que**
les rainures transversales (3) s'étendent sur toute la surface d'appui au sol et se terminent à l'intérieur de la bande profilée (1, 1') à une distance (a) en avant de la rainure périphérique (2), la distance (a) valant de 5,0 mm à 10,0 mm et les rainures (4, 4') d'évacuation d'eau s'étendant dans la direction périphérique présentant sur la plus grande partie de leur extension une profondeur de 1,5 mm à 3 mm, là surface d'appui au sol résultant selon la norme E.T.R.T.O. de la charge à 70 % de la capacité du bandage de roue pour une pression intérieure de 2,5 bars, à une pression intérieure de 85 % de 2,5 bars.

2. Bandage pneumatique pour roue de véhicule selon la revendication 1, **caractérisé en ce qu'**une rainure (4) d'évacuation d'eau part de chaque rainure transversale (3) et se termine à une distance (a₂) de 2 mm à 4 mm en avant de la rainure transversale (3) voisine dans la direction périphérique ou s'étend dans la direction périphérique jusqu'à la rainure transversale (3) voisine.

3. Bandage pneumatique pour roue de véhicule selon la revendication 1, **caractérisé en ce que** les rainures (4') d'évacuation d'eau s'étendent dans la direction périphérique depuis au moins une rainure transversale (3) voisine et jusqu'à la rainure transversale (3) ou se terminent à une distance de la rainure transversale (3) de laquelle part la rainure (4') d'évacuation d'eau suivante dans la direction périphérique.

4. Bandage pneumatique pour roue de véhicule selon l'une des revendications 1 à 3, **caractérisé en ce que** la distance (a₂) entre les extrémités des rainures (4, 4') d'évacuation d'eau et les rainures transversales (3) vaut de 2 mm à 4 mm.

5. Bandage pneumatique pour roue de véhicule selon l'une des revendications 1 à 4, **caractérisé en ce que** la plus grande largeur (b₁) des rainures (4, 4') d'évacuation d'eau vaut de 2 mm à 4 mm.

6. Bandage pneumatique pour roue de véhicule selon l'une des revendications 1 à 5, **caractérisé en ce que** la profondeur des rainures (4, 4') d'évacuation d'eau augmente en particulier de manière continue en direction de leur emplacement qui présente la plus grande largeur (b₁).

7. Bandage pneumatique pour roue de véhicule selon l'une des revendications 1 à 6, **caractérisé en ce que** les rainures (4, 4') d'évacuation d'eau présentent dans une première section (4a, 5a) qui se raccorde à leur départ sur une rainure transversale (3) une profondeur qui correspond à la profondeur de la rainure transversale (3) en cet emplacement.

8. Bandage pneumatique pour roue de véhicule selon la revendication 7, **caractérisé en ce que** la première section (4a, 5a) s'étend sur une distance de 2 mm à 4 mm.
